# EUROPEAN PATENT APPLICATION

(11) **EP 2 919 177 A1**
(43) Date of publication of application: **16.09.2015**
(21) Application number: 15153071.4
(22) Date of filing: 29.01.2015
(51) Int. Cl.: G06Q 20/32, G06Q 20/36, G06Q 20/20

(54) **Method and system for reversed near field contact electronic transaction**

(30) Priority: 15.03.2014 US 201414214891
(71) Applicant: Powa Technologies (Hong Kong) Ltd., Hong Kong (CN)
(72) Inventor: Gadotti, Alessandro, Hong Kong (CN); Tam, Alan Kar Lun, Hong Kong (CN)
(74) Representative: Modiano, Micaela Nadia

(57) **Abstract**

A system and method for conducting payment transaction using a mobile device equipped with a NFC interrogator, comprising: creating a payer user account in a server and associating a payer mobile device with the payer user account; registering, by the server, a payee NFC identity tag; recording, by the server, a payment transaction and associating the payment transaction record to the payee NFC identity tag; interrogating the payee NFC identity tag by the payer mobile device; transmitting the acquired identifier of the payee NFC identity tag to the server; matching the received identifier to the associated payment transaction record; retrieving and sending to the payer mobile device the matched associated payment transaction information; displaying the payment transaction information in the payer mobile device for user confirmation; transmitting the confirmed information and the payer mobile device identification data to the server to complete the payment transaction.

## Description

### Claim for Priority:

This application claims priority under the Paris Convention to the United States Patent Application No. 14/214,891 filed March 15, 2014, the disclosure of which is incorporated herein by reference in its entirety.

### Field of the Invention:

The present invention relates generally to methods of management and execution of electronic bill payments, electronic purchase payments, fund transfers, other value exchanges, and physical facility access control. More specifically, the present invention relates to methods of management and execution of financial transactions and access control using mobile communication devices and particularly devices incorporating near field communication (NFC) technology.

### Background:

Modem day commerce involves conducting financial transactions through many different channels using a variety of instruments. Payment transfer of physical currency is the most common means when the transacting parties are located away from any banking facility. Other payment methods and systems have appeared over the years. Credit cards, debit cards, Internet online payment services such as PayPal^{™}, and near field communication (NFC) enabled stored value holder devices and systems, such as the Octopus Card widely used in Hong Kong, China, are some of the examples. However, none of the existing payment methods and systems has achieved the same level of ubiquity and ease of use as cash. Each of these payment methods and systems requires its dedicated infrastructure and/or is limited to a few channels.

For instance, credit card payments require the merchants or the payees equipped with card readers and fixed communication networks connecting the card readers to the clearance centers. For another instance, the use of NFC technology in contactless payment systems usually means distributing passive identity devices or tags to end customer users, and deploying interrogator devices at points of sales (POS) and facility entrances. Although it is possible to mass-produce these tags and devices in the current state of the art, the need for dedicated infrastructures, which are yet to be built out on a scale beyond the city level of well-developed societies, is an impediment to their general availability and adoption. Moreover, the inconvenience of carrying a tag, security concerns, such as authentication of tag ownership, and potential high transaction cost to both payers and payees are some of the unresolved issues that cast doubts on their wide usages. On the other hand, with the recent rise of use of "smartphone" incorporating NFC technology, consumers are finding themselves equipped with ready and portable NFC interrogators but with little useful applications. The present invention takes advantage of the increasingly prevalent smartphones equipped with NFC interrogators in the hands of consumers, and reverses the traditional roles of NFC identity tags and interrogators by associating the NFC identity tags with the merchants or payees, instead of the payers, in payment transactions.

### Summary:

It is an objective of the presently claimed invention to provide a near field communication (NFC) based mobile payment method and system that can substitute the use of physical currency with the same level of ubiquity and ease of use. It is a further objective of the presently claimed invention to provide a mobile payment method and system that can leverage existing mobile communication devices and communication infrastructures, and does not require a dedicated infrastructure of hardware or network. It is still a further objective of the presently claimed invention to provide a mobile payment method and system having a higher level of security than existing payment methods and systems.

In accordance with various embodiments, the presently claimed invention comprises a central processing server accessible through a first communication network, such as the Internet; a plurality of users including payer users and payee users; mobile communication devices and client computing devices that can access the central processing server through the first communication network; and financial institutions, exchanges, and clearance centers connected to the central processing server through a second communication network, which can be the same as the first communication network.

In accordance with various embodiments, the functionalities of the central processing server comprises user account management for managing user accounts and authenticating users, wherein the user accounts contain user identification and banking information, and are stored securely in a data repository. The banking information includes information on one or more funding sources, such as credit cards, debit cards, and bank accounts; and fund receiving destinations. The central processing server provides an electronic repository of credits or monetary units for each user account (eWallet). The central processing server also provides transaction clearance functionality for processing payments and financial transactions for the users associated with the user accounts. The central processing server has backend network connections and machine-to-machine integration mechanisms, such as application program interfaces (APIs), to connect and interface with financial institutions, financial exchanges, and clearance centers, facilitating the processing of payments and financial transactions for and between the users associated with the user accounts.

In accordance with various embodiments, the central processing server includes a plurality of user interfaces for user interaction using various types of computing devices and mobile communication devices running web browser applications. In addition, the central processing server also includes secure mobile payment server backend APIs for machine-to-machine integration enabling specially-developed applications running in computing devices or mobile communication devices to communicate with the central processing server. These user interfaces and secure mobile payment server backend APIs facilitate the functionalities including, but are not limited to, user account management and online shopping by users, system administration by administrators, online shopping inventory, payment, and fulfillment management by users, NFC identity device and tag registration and management by users.

In accordance with various embodiments, a user account in the central processing server is associated with a payer user's mobile communication device to facilitate financial transaction processing. The central processing server also allows the payer user to define a security personal identification number (PIN) and associate it with his/her user account.

In accordance with various embodiments, the payer user's mobile communication device is equipped with a NFC interrogator capable of generating interrogating radio communication signals, receiving response radio communication signals from and establishing data exchanges with NFC identity devices and tags. The NFC interrogator in the payer user's mobile communication device can be a dedicated hardware component or a software-hardware based emulator in the mobile communication device.

In accordance with various embodiments, the NFC technology employed is based on the ISO/IEC 18000-3, ISO/IEC 14443, ISO/IEC 18092, and other standards defined by the NFC Forum; the disclosures of which are incorporated herein by reference in their entirety.

In accordance with various embodiments, the payer user's mobile communication device is configured to interrogate a NFC identity device or tag placed within its proximity, process the data received from the NFC identity device or tag, and execute the secure mobile payment process. In accordance with various embodiments, the mobile communication device configuration for processing the data received from the NFC identity device or tag and executing the secure mobile payment process is accomplished by installing and executing application software and/or firmware specifically designed for the mobile communication device (secure mobile payment mobile application) in the mobile communication device. Optionally, the operating system of the mobile communication device is modified and/or configured to accomplish portions or all of the aforementioned functionalities. Examples of NFC capable mobile communication devices include, but not limited to, the Google Nexus^{™} 10, HTC One^{™}, Nokia Lumia^{™}, Samsung Galaxy^{™}, and Sony Xperia^{™}.

The secure mobile payment method comprises registering a NFC identity device or tag having a globally unique identity; requesting or initiating a payment transaction by a payee user; associating the payment transaction with the NFC identity device or tag; recording, by the central processing server, information of the payment transaction and the globally unique identity of the associating NFC identity device or tag; interrogating, by a payer user's mobile communication device, the NFC identity device or tag placed near the user's mobile communication device; acquiring, by the payer user's mobile communication device running the secure mobile payment mobile application, the globally unique identity of the NFC identity device or tag; transmitting, by the payer user's mobile communication device running the secure mobile payment mobile application, the globally unique identity of the NFC identity device or tag to the central processing server; matching and retrieving, by the central processing server, information of the payment transaction associating with the NFC identity device or tag using the received globally unique identity received; transmitting, by the central processing server, the matched payment transaction information to the payer user's mobile communication running the secure mobile payment mobile application; displaying, by the payer user's mobile communication, the matched payment transaction information to the payer user for verification.

Optionally, the payer user is allowed to make modification to the matched payment transaction information and/or append new data, such as a payment amount, to be transmitted to the central processing server by the payer user's mobile communication running the secure mobile payment mobile application. The secure mobile payment method further comprises prompting and receiving from the payer user, by the secure mobile payment mobile application, his/her security PIN. The secure mobile payment mobile application performs a cryptographic hash operation on the security PIN received. The cryptographic hash of the security PIN is then transmitted to the central processing server along with the matched payment transaction information, the modified data, appended new data, and identification data of the payer user's mobile communication device.

The central processing server receives the cryptographic hash of the security PIN, the matched payment transaction information, the modified data, appended new data, and identification data of the payer user's mobile communication and verifies the authenticity of the data received and the payer user using the payer user's security PIN, the identification data of the mobile communication device, and data in payer user account preserved in the central processing server. If the authenticity of the data received and the payer user's identity are positively verified, the central processing server executes the transaction by transferring funds from the eWallet of the payer user account to the eWallet of the payee user account. Alternatively, the transfer of funds is conducted by directly debiting from a designated funding source of the payer user and crediting to a designated fund receiving destination of the payee user.

The central processing server then sends the execution result of the transaction to both the payer user and the payee user by electronic mail, Internet instant message, SMS telecommunication message, communication message for the secure mobile payment mobile application, or machine-to-machine communication via its secure mobile payment server backend APIs. The transaction execution results and history logs are also shown in a user interface, such as a web site accessible and readable by a computing device or a mobile communication device running a web browser application, or any application software or firmware designed specifically to access and display web contents.

### Brief Description of the Drawings:

Embodiments of the invention are described in more detail hereinafter with reference to the drawings, in which
FIG. **1** shows a block diagram illustrating an exemplary embodiment of the presently claimed secure mobile payment system;
FIG. **2** depicts a use case diagram illustrating an embodiment of a process of making payment in accordance to the presently claimed invention; and
FIG. **3a** and FIG. **3b** depict a use case diagram illustrating an embodiment of a process of paying for merchandise at retail stores in accordance to the presently claimed invention.

### Detailed Description:

In the following description, methods and systems of secure mobile payment and the like are set forth as preferred examples. It will be apparent to those skilled in the art that modifications, including additions and/or substitutions may be made without departing from the scope and spirit of the invention. Specific details may be omitted so as not to obscure the invention; however, the disclosure is written to enable one skilled in the art to practice the teachings herein without undue experimentation.

### System:

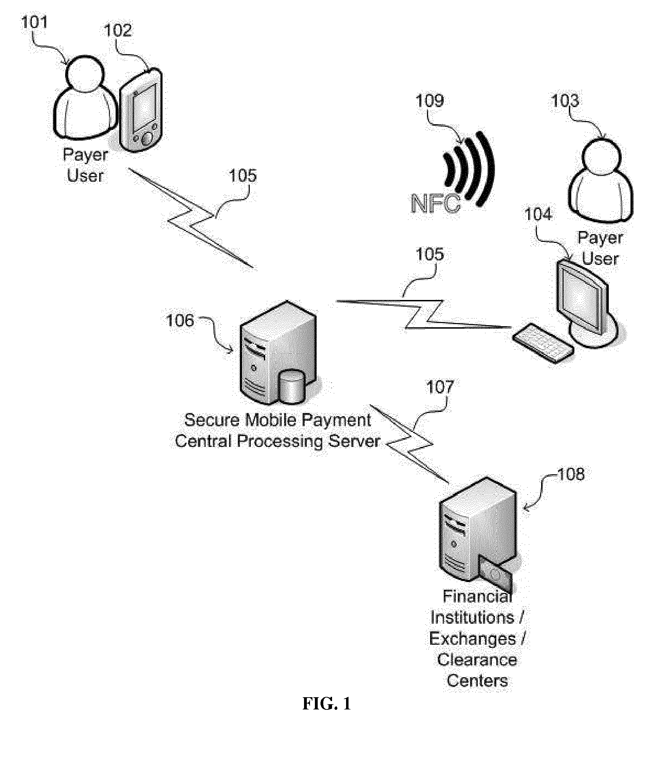

Referring to FIG. **1****.** In accordance with various embodiments the presently claimed invention comprises a central processing server **106** accessible through a first communication network **105** such as the Internet; a plurality of users including payer users **101,** and payee users **103;** mobile communication devices **102;** optionally point of sale (POS) terminals/counters **104** that can access the central processing server through the first communication network **105;** near field communication (NFC) identity devices and tags **109;** and financial institutions, exchanges and clearance centers **108** connected to the central processing server through a second communication network **107,** which can be the same as the first communication.

The mobile communication devices are equipped with NFC interrogators capable of generating interrogating radio communication signals, receiving response radio communication signals from and establishing data exchanges with NFC identity devices and tags. The NFC interrogator in the mobile communication device can be a dedicated hardware component or a software-hardware based emulator in the mobile communication device. In accordance with various embodiments, the NFC technology employed is based on the ISO/IEC 18000-3, ISO/IEC 14443, ISO/IEC 18092, and other standards defined by the NFC Forum. The mobile communication devices are configured to interrogate NFC identity devices or tags placed within their proximities, process the data received from the NFC identity devices or tags, communicate and interact with the central processing server, and initiate the payments or transaction processes.

In accordance with various embodiments, the mobile communication device configuration is accomplished by installing and executing application software and/or firmware specifically designed for the mobile communication device (secure mobile payment mobile application) in the mobile communication device. Optionally, the operating system of the mobile communication device is modified and/or configured to accomplish portions or all of the aforementioned functionalities. Examples of NFC capable mobile communication devices include, but not limited to, the Google Nexus^{™} 10, HTC One^{™}, Nokia Lumia^{™}, Samsung Galaxy^{™}, and Sony Xperia^{™}.

In accordance with various embodiments, each of the NFC identity devices and tags has a unique identity at least within the secure mobile payment system. Each NFC identity device or tag is used to identify a particular POS terminal/counter, a product or service item, and/or a payment transaction. One NFC identity device or tag can also be used to identify multiple payment transactions if each is being conducted at different time period. If the NFC identity device or tag is used to identify a POS terminal/counter, it is often placed near the POS terminal/counter. If the NFC identity device or tag is used to identify a product item, it can be affixed on to the product item.

In accordance with various embodiments, the functionalities of the central processing server comprise a user account management functionality for managing user accounts and authenticating users, wherein the user accounts contain user identification and banking information, and are stored securely in a data repository. The central processing server includes an electronic repository of monetary units (eWallet) for each user account enabling the monetary payments and fund transfers from one user account to another. The eWallet can also be debited and credited to and from an external funding source such as the user's credit card or bank account.

The central processing server includes a first group of user interfaces for users accessible by computing devices and mobile communication devices through a communication network, such as the Internet, a telecommunication network, and any network supporting the TCP/IP protocol; and a second group of user interfaces for business users accessible by computing devices and mobile communication devices through the communication network. Both groups of user interfaces include interactive transactional web sites that can be displayed in web browser applications running in computing devices and mobile communication devices, and user interfaces that are specifically designed as mobile applications running in mobile communication devices. One exemplary embodiment of such user interface is a mobile application (App) running on the iOS operating system developed by Apple Inc. Another exemplary embodiment of such user interface is a mobile application (App) running on the Android operating system developed by Google Inc. The central processing server also provides a third group of user interfaces for system administrator accessible by computing devices and through the communication network.

In addition to the groups of user interfaces, the central processing server also includes secure mobile payment server backend APIs for machine-to-machine integration, enabling specially-developed applications running in computing devices or mobile communication devices to communicate with the central processing server. In accordance to various embodiments, the machine-to-machine data interchanges via the secure mobile payment server backend APIs supports industry standards including, but are limited to, XML and JSON.

The central processing server further comprises transaction clearance functionalities for processing payments and financial transactions for the users associated with the user accounts. The central processing server has backend network connections and machine-to-machine integration mechanisms, such as the secure mobile payment server backend APIs, to connect and integrate with financial institutions, financial exchanges, and clearance centers, facilitating the processing of payments and financial transactions for and between the users associated with the user accounts.

### Individual User Account Setup:

In accordance to various embodiments, an individual user in the secure mobile payment can act as a payer or a payee at any point of time depending on the transaction being conducted. The method of secure mobile payment comprises an individual user account setup process, wherein the individual user account setup process comprises the steps of user registration, user validation, user profile management, funding source management, and device pairing as listed below:

User Registration:
1. A new individual user accesses the central processing server user interface using a client computing device with a browser software application or a mobile communication device configured to be able to access the central processing server user interface.
2. The new individual user selects create user account action in the central processing server user interface, provides his/her personal information including at least his/her first name, last name, and email address, a mobile phone number including the country code, and provides a password for subsequently signing into the central processing server.
3. The new individual user is also asked to select from a list of security questions, such as "Where did you travel on your honeymoon?" and "What is the name of your first pet?", and provide the answer to the chosen security question. Lastly, the new individual user is asked to provide the answer to a qualifying question, such as a portion of a government issued identification number.

### User Validation:

4. The central processing server sends a validation email to the email address provided by the new individual user.
5. The newly created user account is validated by the new individual user receiving and reading the validation email, and accessing a validation web hyperlink, which bears the new individual user's personal identification data within, in the validation email.
6. The access action of the validation web hyperlink sends the new individual user's personal identification data to the central processing server; and upon the receipt of this data, the validation of the newly created user account is completed, and the new individual user is notified as such.

### User Profile Management:

7. After the newly created user account is validated, the new individual user can access his/her user account by accessing the central processing server user interface and signing in using his/her email address, mobile phone number, and password.
8. After signing into his/her user account, the new individual user can enter and modify his/her user profile information including, but is not limited to, name, email address, residence address, business address, delivery address, and mobile phone number for being saved and associated with his/her user account.

### Funding Source Management:

9. Within the user account signed-in session, the new individual user can add, modify, and remove one or more funding source to associate with his/her user account. The funding source is for crediting to (recharging) and debiting from (withdrawing) the virtual repository of monetary units of his/her user account. For adding a funding source, the new individual user can select a credit card, debit card, bank account, or other funding source type, enter the card number or account number, the card or account holder's name and billing address, applicable expiration date and verification code.
10. The central processing server creates an unverified funding source with information entered by the new individual user.
11. Only a verified funding source can be used to recharge and withdraw the eWallet of the user account. The new individual user can initiate the verification of the newly added funding source within the user account signed-in session.
12. For credit card type funding source, a debit of small amount is made against the credit card with a reference identifier associated with the transaction, which is shown on the credit card account statement. The debited amount is credited to the eWallet of the new individual user's user account. The funding source verification is completed upon the new individual user retrieving the reference identifier and entering it in the central processing server user interface during a user account signed-in session.
13. For bank account type funding source, two debits of two different amounts are made against the bank accounts, which can be shown on the bank account statement. The debited amounts are credited to the eWallet of the new individual user's user account. The funding source verification is completed upon the new individual user being notified of the two debits and entering them central processing server user interface during a user account signed-in session.
14. Within the user account signed-in session, the new individual user can indicate to the central processing server to link the eWallet to her/her user account with one or more verified funding sources for transferring funds between the eWallet and the linked verified funding sources.

### Device Pairing:

15. A mobile communication device equipped with a NFC interrogator must be paired, or associated, with the new individual user's user account. Only one mobile communication device can be paired with a user account at any one time. If a user account is already paired with a mobile communication device, it must be unpaired before another mobile communication device is paired with the user account.
16. The new individual user configures his/her mobile communication device to be able to access the central processing server user interface. In one exemplary embodiment, the new individual user uses his/her mobile communication device to access a mobile application store, find, download, and install the secure mobile payment mobile application, which is specifically designed to interact with the central processing server, in his/her mobile communication device. By launching and interacting with the secure mobile payment mobile application running in his/her mobile communication device, the new individual user can access the central processing server to initiate the pairing process.
17. Using the secure mobile payment mobile application running in his/her mobile communication device, the new individual user signs in to his/her user account using his/her email, mobile phone number, and password that are registered in a prior user registration. The information is sent to the central processing server for authentication.
18. The central processing server authenticates the new individual user. Upon a positive authentication, the central process server identifies that the mobile communication device is not yet paired with the user account, replies with the previously chosen security question and qualifying question to the mobile communication device running the secure mobile payment mobile application.
19. The new individual user is prompted to enter an answer to the security question and an answer to the qualifying question; and the answers are sent to the central processing server.
20. The central processing server verifies the security answer and the qualifying answer. Upon a positive verification, the central processing server sends the mobile communication device a SMS message communication containing an activation code.
21. Upon receiving the SMS message communication and the activation code contained within, the new individual user enters the activation code and a user-defined security PIN in the secure mobile payment mobile application. In one embodiment, the security PIN can be a 4, 5, or 6-digit number combination.
22. The secure mobile payment mobile application performs a cryptographic hash operation on the security PIN received. The activation code and the cryptographic hash of the security PIN are sent to the central processing server for verification and storage, completing the device pairing process.

### Merchant User Account Setup:

In accordance to various embodiments, a merchant user in the secure mobile payment can act as a payer or a payee at any point of time depending on the transaction being conducted. The method of secure mobile payment comprises a merchant user account setup process, wherein the merchant user account setup process comprises the steps of user registration, user validation, user profile management, funding source management, device pairing, and user account activation as in the individual user account setup process as described above. The merchant user account setup process, however, further comprises the steps of creating delegate users, delegate user validation, and delegate user device pairing.

Creating Delegate users:
1. After the user validation step is complete, the new merchant user can access his/her user account by accessing the central processing server user interface and signing in using his/her email address, mobile phone number, and password. Using the central processing server user interface, the new merchant user provides the identity information, email addresses, mobile phone numbers, and passwords of one or more delegate users.

The new merchant user can specify the level of authorization and access for each delegate user; wherein the level of authorization is selected from a selection comprising view the merchant user account information only, administer the merchant user account, make payments, and request payments from others. The new merchant user can specify limits on spending amounts for each delegate user.

### Delegate User Validation:

2. After the new merchant user created the one or more delegate users, the central processing server sends a validation email to each of the delegate user email addresses provided by the new merchant user. The remaining delegate user validation steps are substantially the same as the user validation steps for individual user.

### Delegate User Device Pairing:

3. If a delegate user is assigned a level of authorization of making payments or requesting payments from others or above, the delegate user can pair his/her mobile communication device with the merchant user account. The delegate user device pairing steps are substantially the same as device pairing steps for individual user.

### Registering a NFC Identity Devise or Tag:

In accordance to various embodiments, the method of secure mobile payment comprises a process of a merchant user of the secure mobile payment method associating a NFC identity devise or tag with a point of sale terminal/counter, a product/service item, or a payment transaction (registering a NFC identity devise or tag), which comprises the following steps:
1. A merchant user acting as a payee accesses the central processing server user interface using a computing device or mobile communication device running a web browser application and signs in with his/her email address and/or mobile phone number, and password; or a mobile communication device, that has already been paired with the merchant user's user account, running the secure mobile payment mobile application.
2. If the web browser application is used, the merchant user enters in the central processing server user interface the identifier of the NFC identity devise or tag to be registered and optionally the payment transaction information including, but not limited to, the merchant user's identity information, a payment amount, description of the specific transaction, description of the point of sale terminal/counter, and description of the product/service item. These data are preserved in the data repository of the central processing server for later retrieval by matching the identifier of the NFC identity devise or tag.
3. If the secure mobile payment mobile application is used, the NFC identity devise or tag is placed near the merchant user's mobile communication device for interrogation. After acquiring the identifier of the NFC identity devise or tag, the secure mobile payment mobile application prompts the merchant user to enter in its user interface the payment transaction information. The entered data are transmitted to the central processing server to be preserved in its data repository for later retrieval by matching the identifier of the NFC identity devise or tag.

### Making payments:

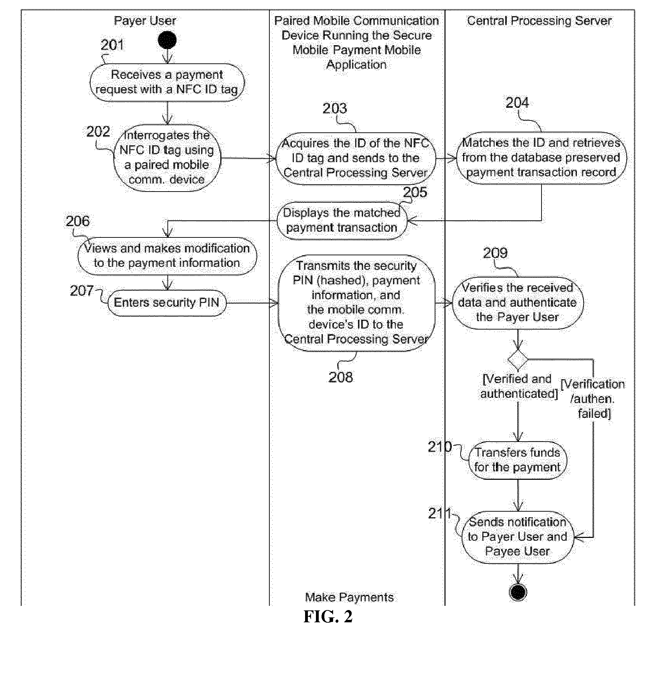

Referring to FIG. **2****.** In accordance to various embodiments, the method of secure mobile payment comprises a payment process comprising the following steps:
1. (**201**) A payer user receives a presentment of payment request, such as a bill or a price tag on merchandise, with a NFC identity devise or tag attached; wherein the NFC identity devise or tag has been registered with the secure mobile payment system with payment information, including a payment amount, recorded and preserved in the data repository of the central processing server. The NFC identity devise or tag can be affixed on to the bill or merchandise or presented to the payer separately.
2. (**202**) The payer user uses his/her mobile communication device equipped with a NFC interrogator to interrogate the NFC identity devise or tag; wherein the mobile communication device has already been paired with the payer user's user account.
3. (**203**) The mobile communication device acquires the identifier of the NFC identity devise or tag from the interrogation, launches the secure mobile payment mobile application if it is not already running, and the mobile communication device running the secure mobile payment mobile application transmits the identifier of the NFC identity devise or tag to the central processing server.
4. (**204**) The central processing server attempts to match the received identifier of the NFC identity devise or tag with a preserved data record of the payment transaction from its data repository. Upon finding a positive match, the central processing server retrieves from its data repository the matched payment transaction record.
5. (**205**) The matched payment transaction record is sent back to the payer's mobile communication device and be displayed to the payer user in the secure mobile payment mobile application for verification.
6. (**206**) Using the secure mobile payment mobile application, the payer user can optionally make modification to the displayed payment transaction record information including the money amount. The payer user can also provide additional information such as whether the payment is recurring, and if so, the recurrence frequency, payment settlement dates, and effective time periods. The payer user can also provide an address and time for the product/service delivery.
7. (**207**) The secure mobile payment mobile application prompts the payer user for entering his/her security PIN. With the security PIN entered, the payer user indicates in the secure mobile payment mobile application to complete the payment transaction.
8. (**208**) The secure mobile payment mobile application performs a cryptographic hash operation on the security PIN received and transmits the cryptographic hash of the security PIN to the central processing server along with the verified payment transaction information, the modified data, appended new data, and identification data about the mobile communication device.
9. (**209**) The central processing server receives the information and verifies the authenticity of the information received and the payer user using the payer user supplied security PIN, the identification data about the mobile communication device, with data in payer user account preserved in the data repository.
10. (**210**) If the authenticity of the information received and the payer user's identity are positively verified, the central processing server executes the transaction by transferring funds from the eWallet of the payer user account to the eWallet of the payee user account.
11. (**211**) The central processing server then sends the execution result of the payment transaction to both the payer user and the payee user by electronic mail, Internet instant message, SMS telecommunication message, communication message for the secure mobile payment mobile application, or communication via the secure mobile payment server backend APIs. The transaction execution results and history logs are also shown in a web site accessible and readable by a computing device or a mobile communication device running a web browser application, or any application software or firmware designed specifically to access and display web contents.

### Paying for Merchandise at Retail Stores:

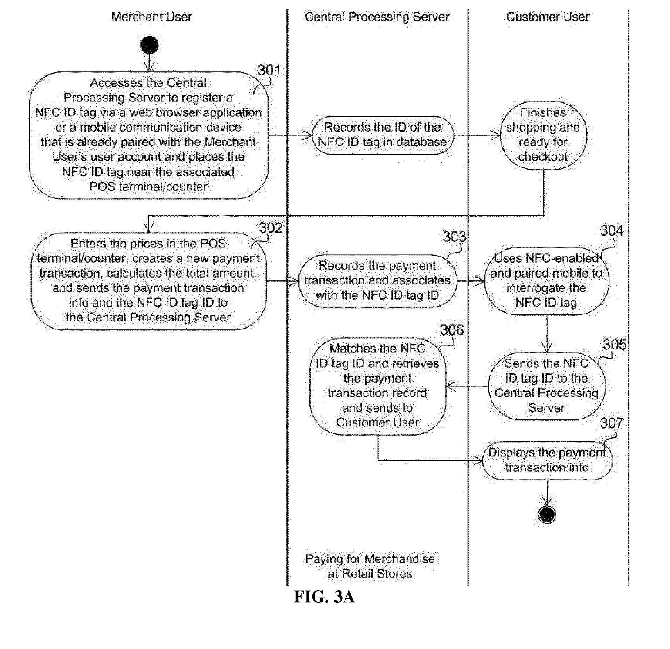

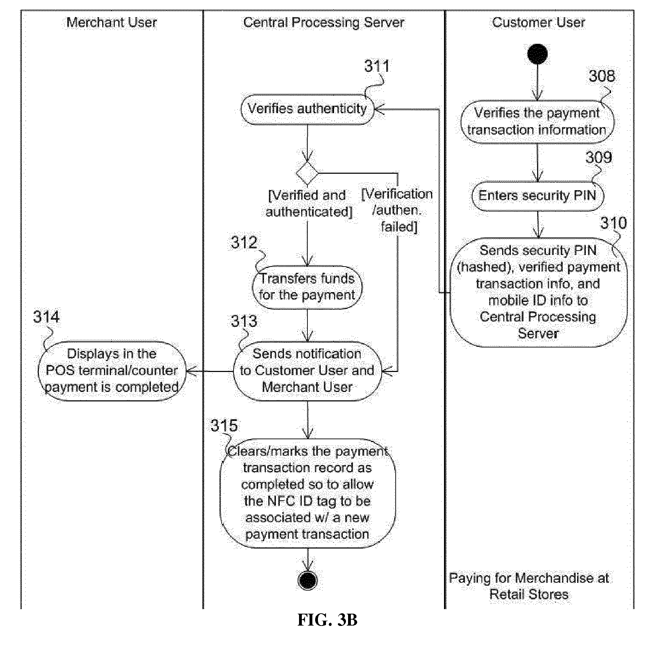

Referring to FIG. **3a** and FIG. **3b****.** In accordance to various embodiments, the method of secure mobile payment comprises a process of a customer user, acting as a payer, paying for merchandise at a merchant user's retail store comprising the following steps:
1. (**301**) A merchant user first registers a NFC identity device or tag with the secure mobile payment system according to the aforementioned process to associate the NFC identity device or tag with a point of sale (POS) terminal/counter and places the NFC identity device or tag within the proximity of the checkout counter where the POS terminal/counter is located.
2. (**302**) At the retail store checkout counter, the customer user is ready to pay for her selected merchandise. The prices of the merchandise are entered into the POS terminal/counter either through self-help or by store personnel. The POS generates a payment transaction, calculates the total payment amount, and transmits the payment transaction information along with the identifier of the NFC identity device or tag associated to the central processing server.
3. (**303**) The central processing server receives the identifier of the NFC identity device or tag associated with the POS and the payment transaction information. The central processing records the payment transaction information and associates it with the identifier of the NFC identity device or tag in its data repository.
4. (**304**) The customer user uses his/her mobile communication device equipped with a NFC interrogator to interrogate the NFC identity devise or tag associated with the POS; wherein the mobile communication device has already been paired with the customer user's user account.
5. (**305**) The mobile communication device acquires the identifier of the NFC identity devise or tag from the interrogation, launches the secure mobile payment mobile application if it is not already running, and the mobile communication device running the secure mobile payment mobile application transmits the identifier of the NFC identity devise or tag to the central processing server.
6. (**306**) The central processing server matches the received identifier of the NFC identity devise or tag to a preserved data record of the payment transaction in its data repository. Upon finding a positive match, the central processing server retrieves the matched the payment transaction record.
7. (**307**) The matched the payment transaction record is sent back to the payer's mobile communication device and be displayed to the customer user in the secure mobile payment mobile application for verification.
8. (**308**) Using the secure mobile payment mobile application, the customer user can verify the payment transaction information including the money amount and the merchandise to be purchased.
9. (**309**) The secure mobile payment mobile application prompts the customer user for entering his/her security PIN. With the security PIN entered, the customer user indicates in the secure mobile payment mobile application to complete the payment transaction.
10. (**310**) The secure mobile payment mobile application performs a cryptographic hash operation on the security PIN received and transmits the cryptographic hash of the security PIN to the central processing server along with the verified payment transaction information, and identification data of the mobile communication device.
11. (**311**) The central processing server receives the information and verifies the authenticity of the information received and the customer user using the customer user supplied security PIN, the identification data of the mobile communication device, and data in customer user account preserved in the data repository.
12. (**312**) If the authenticity of the information received and the customer user's identity are positively verified, the central processing server executes the transaction by transferring funds from the eWallet of the customer user account to the eWallet of the merchant user account.
13. (**313**) The central processing server then sends the execution result of the payment transaction to both the customer user and the merchant user by electronic mail, Internet instant message, SMS telecommunication message, communication message for the secure mobile payment mobile application, or communication via the secure mobile payment server backend APIs. The transaction execution results and history logs are also shown in a web site accessible and readable by a computing device or a mobile communication device running a web browser application, or any application software or firmware designed specifically to access and display web contents.
14. (**314**) The POS terminal/counter can optionally receive the execution result of the payment transaction from the central processing server and display the result.
15. (**315**) The central processing server clears and marks the payment transaction record as completed so to allow the NFC identity devise or tag to be used to associate with a new payment transaction.

The embodiments disclosed herein may be implemented using general purpose or specialized computing devices, mobile communication devices, computer processors, or electronic circuitries including but not limited to digital signal processors (DSP), application specific integrated circuits (ASIC), field programmable gate arrays (FPGA), and other programmable logic devices configured or programmed according to the teachings of the present disclosure. Computer instructions or software codes running in the general purpose or specialized computing devices, mobile communication devices, computer processors, or programmable logic devices can readily be prepared by practitioners skilled in the software or electronic art based on the teachings of the present disclosure.

In some embodiments, the present invention includes computer storage media having computer instructions or software codes stored therein which can be used to program computers or microprocessors to perform any of the processes of the present invention. The storage media can include, but are not limited to, floppy disks, optical discs, Blu-ray Disc, DVD, CD-ROMs, and magneto-optical disks, ROMs, RAMs, flash memory devices, or any type of media or devices suitable for storing instructions, codes, and/or data.

Exemplary embodiments of mobile communication devices include, but are not limited to, mobile telephones, mobile telephones with personal computer like capability (commonly referred to as "smartphones"), electronic personal digital assistants (PDAs), portable computers with wired or wireless wide-area-network and/or telecommunication capability such as tablet personal computers and "netbook" personal computers.

Exemplary embodiments of POS terminals/counters include, but are not limited to, non-electronic cash registry machines, electronic cash registry machines, electronic kiosks, general purpose or specialized computing devices configured to execute POS software.

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

## Claims

1. A method for conducting payment transaction using mobile communication devices, comprising:
creating a payer user account for a payer user in a central processing server,
wherein the payer user account creation comprises associating a payer mobile communication device with the payer user account by preserving identification data of the payer user and identification data of the payer mobile communication device in a data repository,
wherein the payer mobile communication device being equipped with a near field communication (NFC) interrogator, one or more processors, and configured to communicate with the central processing server through a first communication network, and
wherein the payer user account creation further comprises creating a payer virtual repository of monetary units associating with the payer user account by preserving data of the payer user's financial information in the data repository;
creating a payee user account for a payee user in a central processing server,
wherein the payee user account creation comprises creating a payee virtual repository of monetary units associating with the payee user account by preserving data of the payee user's financial information in the data repository;
registering, by the central processing server, a payee near field communication (NFC) identity device or tag, comprising recording an identifier of the payee NFC identity device or tag in the data repository;
recording, by the central processing server, information of a payment transaction in the data repository and associating the payment transaction information record to the identifier of the payee NFC identity device or tag;
interrogating the payee NFC identity device or tag by the payer mobile communication device using its interrogator, comprising acquiring the identifier of the payee NFC identity device or tag;
processing information of the payment transaction associated with the payee NFC identity device or tag, comprising:
transmitting, by the payer mobile communication device, the acquired identifier of the payee NFC identity device or tag to the central process server,
matching, by the central process server, the received identifier of the payee NFC identity device or tag to the associated payment transaction information record in the data repository;
retrieving from the data repository and sending to the payer mobile communication device the matched associated payment transaction information;
displaying the matched associated payment transaction information on a screen in the payer mobile communication device; and
receiving a user input indicating user confirmation from the payer user; and
transmitting, by the payer mobile communication device, the matched associated payment transaction information and identification data about the mobile communication device to the central processing server through the first communication network upon user confirmation;
verifying, by the central processing server, authenticity of the received the matched associated payment transaction information and identification data about the mobile communication device;
transferring, by the central processing server, monetary units between the payer virtual repository of monetary units and the payee virtual repository of monetary units by modifying data of the payer user's financial information and data of the payee user's financial information in the data repository upon positive verification of authenticity of the received the matched associated payment transaction information and identification data about the mobile communication device.

2. The method of Claim 1,
wherein the associating of the payer mobile communication device with the payer user account comprises the payer user defining a security personal identification number (PIN) to be preserved in the central processing server; and
wherein the user confirmation of the matched associated payment transaction information displayed on the screen in the payer mobile communication device comprises the payer user providing the security PIN to be transmitted by the payer mobile communication device to the central processing server for authenticity verification.

3. The method of Claim 1, further comprising transmitting, by the central processing server, notification of execution result of the payment transaction to the payer mobile communication device.

4. The method of Claim 1, wherein the central processing server is configured to provide user interfaces that are accessible and displayable by web browser applications running in computing devices or mobile communication devices.

5. The method of Claim 1, wherein the central processing server is configured to provide secure mobile payment server backend application program interfaces (APIs) enabling specially-developed applications running in computing devices or mobile communication devices to communicate with the central processing server.

6. The method of Claim 1, wherein the payment transaction is generated by a point of sale (POS) terminal/counter upon collecting and computing prices of merchandise being purchased by the payer.

7. A system for conducting payment transaction using mobile communication devices, comprising:
a central processing server configured to:
create a payer user account for a payer user, wherein the payer user account creation comprises associating a payer mobile communication device with the payer user account, and creating a payer virtual repository of monetary units associating with the payer user account;
create a payee user account for a payee user, wherein the payee user account creation comprises creating a payee virtual repository of monetary units associating with the payee user account; and
register a payee near field communication (NFC) identity device or tag, comprising recording an identifier of the payee NFC identity device or tag in a data repository;
record information of a payment transaction in the data repository and associate the payment transaction information record to the identifier of the payee NFC identity device or tag;
match the identifier of the payee NFC identity device or tag to the associated payment transaction information record in the data repository when requested by the payer mobile communication device; and
retrieve from the data repository and send to the payer mobile communication device the matched associated payment transaction information;
the payer mobile communication device equipped with a near field communication (NFC) interrogator and configured to:
communicate with the central processing server;
interrogate the payee NFC identity device or tag by the payer mobile communication device using its interrogator, comprising acquiring the identifier of the payee NFC identity device or tag;
process information of the payment transaction associated with the payee NFC identity device or tag, comprising:
transmitting the acquired identifier of the payee NFC identity device or tag to the central process server for matching and retrieving the associated payment transaction information record,
receiving from the central processing and displaying the matched associated payment transaction information on a screen in the payer mobile communication device, and
receiving a user input indicating user confirmation from the payer user;
transmit the matched associated payment transaction information and identification data about the mobile communication device to the central processing server.

8. The system of Claim 7,
wherein the associating of a payer mobile communication device with the payer user account comprises the payer user defining a security personal identification number (PIN) to be preserved in the central processing server; and
wherein the user confirmation of the matched associated payment transaction information displayed on the screen in the payer mobile communication device comprises the payer user providing the security PIN to be transmitted by the payer mobile communication device to the central processing server for authenticity verification.

9. The system of Claim 7, wherein the central processing server is further configured to transmit notification of execution result of the payment transaction to the payer mobile communication device.

10. The system of Claim 7, wherein the central processing server is further configured to provide user interfaces that are accessible and displayable by web browser applications running in computing devices or mobile communication devices.

11. The system of Claim 7, wherein the central processing server is further configured to provide secure mobile payment server backend application program interfaces (APIs) enabling specially-developed applications running in computing devices or mobile communication devices to communicate with the central processing server.

12. The system of Claim 7, wherein the payment transaction is generated by a point of sale (POS) terminal/counter upon collecting and computing prices of merchandise being purchased by the payer.
